Europäisches Patentamt

European Patent Office

Office européen des brevets

(11) Publication number: **0 403 144**
**A2**

## EUROPEAN PATENT APPLICATION

(21) Application number: 90306119.0

(22) Date of filing: 05.06.90

(51) Int. Cl.5: **F16K 31/40**

(30) Priority: 10.06.89 GB 8913541

(43) Date of publication of application:
19.12.90 Bulletin 90/51

(84) Designated Contracting States:
DE FR GB IT SE

(71) Applicant: LUCAS INDUSTRIES public limited
company
Great King Street
Birmingham, B19 2XF West Midlands(GB)

(72) Inventor: Dawson, Stuart Bruce
35 Ralph Road, Shirley
Solihull, West Midlands B90 3JX(GB)

(74) Representative: Spall, Christopher John et al
BARKER, BRETTELL & DUNCAN 138 Hagley
Road
Edgbaston Birmingham B16 9PW(GB)

(54) **Improvements in fluid flow valve assemblies.**

(57) A fluid flow valve assembly comprises a piston
(7) working in a bore (6) in a housing (1) with a
rolling/sliding seal (8) between the piston and the
bore. The piston (7) defines a valve member be-
tween first and second chambers (12,13) and in-
cludes a valve head (11) for engagement with a
seating (4) surrounding an outlet passage (3), and a
restricted passage (17) between an inlet (2) and the
first chamber (12). A solenoid-operated control valve
(19) is movable between open and closed positions
to control communication between the chambers
(12,13). When the control valve (19) closes, and the
piston (7) moves towards the seating (4), the rolling
seal (8) acts to damp movement of the piston.

FIG.1.

## IMPROVEMENTS IN FLUID FLOW VALVE ASSEMBLIES

This invention relates to a new or improved fluid flow valve assembly for controlling communication between an inlet and an outlet in a housing, the valve assembly being of the kind comprising a seating in the housing between the inlet and the outlet, a valve member movable in opposite directions with respect to the seating by differential pressures acting across the valve member and established in one direction by a restricted flow path across the valve member from the inlet, and a control valve adapted to control the generation of the differential pressures, closure of the control valve isolating chambers on opposite sides of the valve member from each other and establishing a differential pressure across the valve member in a closing direction to bias it into engagement with the seating by flow through the flow path, opening the control valve acting to cause a reduction in the pressure differential whereby the valve member is adapted to move relatively away from the seating to place the inlet in open communication with the outlet.

In flow valve assemblies of the kind set forth, when the control valve closes, there is a tendency for the valve member to be urged rapidly towards the seating. This, in turn, may establish a greater pressure on the valve member in an opening direction than has been established in the closing direction. In consequence there may be a tendency for the flow valve to open again. This is undesirable since leakage may occur. Such an effect is particularly common in flow valve assemblies in which the valve member comprises a flexible diaphragm and is generally referred to as "hydraulic bounce".

According to our invention a fluid flow valve assembly comprises a piston working in a bore in a housing and defining a valve member between first and second chambers, a seal between the piston and the bore, a seating in the housing between an inlet and an outlet in the housing, a valve head on the piston for engagement with the seating, a restricted passage in the piston between the inlet and the first chamber which is defined in the bore on the side of the piston remote from the seating, and a control valve for controlling communication between the first chamber and the outlet, the control valve being movable between a closed position and an open position, in the closed position the control valve isolates the first chamber and the outlet from each other whereby the piston is urged into engagement with the seating by pressure applied to the first chamber from the inlet through the restricted passage, and in the open position the control valve places the first chamber in open communication with the outlet whereby the piston moves relatively away from the seating to place the inlet in open communication with the outlet due to a pressure drop from the first chamber to the outlet and the pressure drop between the first chamber and the inlet through the restricted passage.

When the control valve closes and the piston moves towards the seating, the seal acts to damp the movement of the piston. Hydraulic bounce and consequent leakage is therefore avoided.

Conveniently the seal which acts as a rolling/sliding seal comprises an annular ring of elastomeric material housed in a radial groove in either the piston or the wall of the bore in the housing.

The outlet is relatively large in comparison to the inlet. This ensures a rapid transfer of fluid from the inlet to the outlet making the assembly suitable for use as a dump valve in a vehicle hydraulic anti-lock braking system in which fluid is dumped from the inlet to an expansion chamber or reservoir when the piston moves away from the seating.

In such a system the control valve may be operated by an electrical solenoid responsive to signals from a wheel speed sensor.

One embodiment of our invention is illustrated in the accompanying drawings in which:-

Figure 1 is a longitudinal section through a solenoid-operated dump valve assembly for a vehicle hydraulic anti-lock braking system; and

Figure 2 is a fragmentary section of a portion of the valve assembly showing a modification.

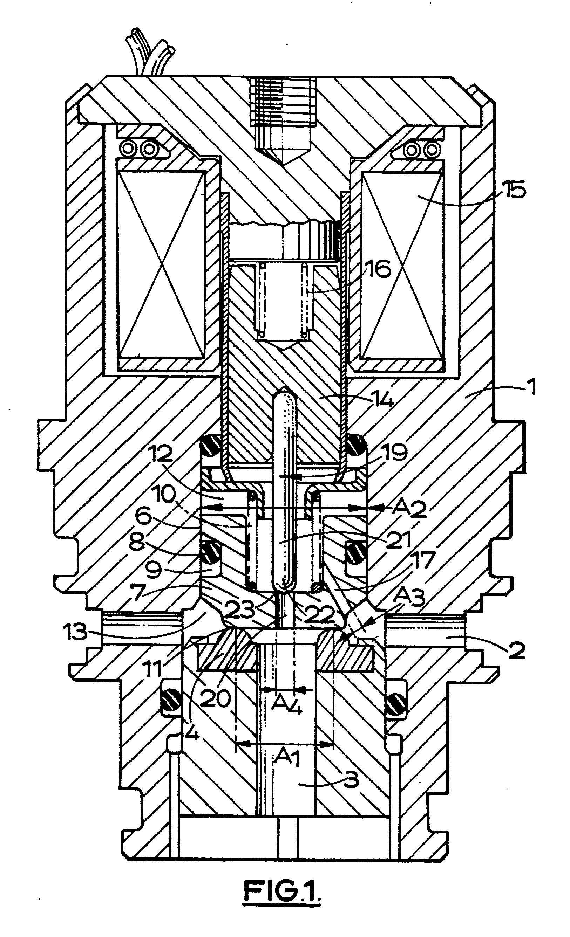

The valve assembly illustrated in Figure 1 of the accompanying drawings comprises a housing 1 having a radial inlet passage 2 for braking fluid and an axial outlet passage 3 of greater area than the passage 2 and which leads to an expansion chamber or reservoir. A seating 4 surrounds the inner end of the outlet passage 3.

The housing 1 has a longitudinally extending bore 6 which is co-axial with, and of greater diameter than, the passage 3. The bore 6 is of a greater area A2 than the area Al of the seating 4. A valve member comprising a piston 7 works in the bore 6, and a dynamic seal in the form of a ring 8 located in a radial groove 9 in the piston 7 seals against the bore. A light compression spring 10 urges the piston 7 relatively towards the seating so that a head 11 at the end of the piston 7 remote from the spring 10 is adapted to seat against the seating 4.

The piston 7 divides the bore 6 into first and second chambers 12,13 of which the chamber 12 is defined between the piston 7 and an armature 14 which is movable axially relatively away from the piston 7 by energisation of the solenoid 15 and against the force in the spring 16. The solenoid 15 is responsive to signals from a wheel speed sensor. The second chamber 13 is in permanent communication both with the inlet passage 2 directly and with the chamber 12 through a restricted passage 17 which extends through the piston 7.

A control valve 19 operated by the solenoid 15 controls communication between the chambers 12 and 3 through an axial passage 20 in the piston 7. The axial passage 20 is of an area A4 greater than the area A3 of the restricted passage 17, but less than that of the inlet passage 2 and the outlet passage 3. The control valve 19 comprises a valve member 21 which extends axially from and is carried by the armature 14. The free end of the valve member 21 defines a head 22 for engagement with a seating 23 on the piston 7 which surrounds the inner end of the axial passage 20.

In the inoperative position shown in the drawings in which the solenoid is de-energised, pressure in the brake circuit is fed to the inlet passage 2, and pressure across the piston 7 is equalised by the restricted passage 17. The friction in the seal 8 and the load in the spring 10 urge the head 11 on the piston 7 against the seating 4, and the spring 16 acts through the armature 14 to urge the head 22 against the seating 23. This isolates the inlet passage 2 from the outlet passage 3 and inadvertent leakage into the expansion chamber is therefore prevented.

When the solenoid 15 is energised in response to a wheel speed signal, the armature 14 moves relatively away from the piston 7 against the force in the spring 10 to open the valve 19. Pressure in the chamber 12 then decays rapidly into the outlet passage 3 through the passage 20. Since the restricted passage 17 is smaller in area than the passage 20, the pressure in the inlet passage 2 is unable to achieve equilibrium across the piston 7. The pressure drop acting on the piston 7 across an area equal to the difference between the areas A2 and A4 overcomes the friction in the seal 8 and the load in the spring 10 so that the piston 7 moves in the bore 6 with the head 11 moving relatively away from the seating 4 to place the inlet passage 2 in open communication with the outlet passage 3.

When the proximity of the head 22 to the seating 23 provides a flow similar to that occurring through the passage 17, movement of the piston 7 in that direction will cease.

Upon de-energisation of the solenoid 15 the compressed spring 16 is released to accelerate the armature 14 and the valve 21 relatively towards the seating 4. The head 22 engages with the seating 23 and the piston 7, assisted by the spring 10, returns the piston 7 to its original position with the head 11 in engagement with the seating 4. Any tendency for the head 11 to move away from the seating 14 due to hydraulic bounce is prevented by the damping effect due to the resilience in the dynamic seal 8. Pressure equilibrium across the piston 7 is achieved by the restricted passage 17 since the control valve 19 is closed.

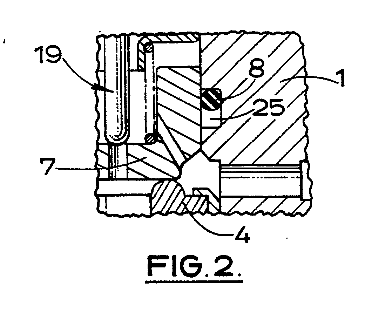

A modification of the valve assembly is illustrated in Figure 2 of the accompanying drawings. In the modification shown in Figure 2 the groove 9 is omitted and the seal 8 is located in a radial groove 25 in the wall of the bore 6 in the housing 1.

The valve assembly of Figure 2 is otherwise the same as that of Figure 1, and corresponding reference numerals have been applied to corresponding parts.

## Claims

1. A fluid flow valve assembly comprising a piston working in a bore (6) in a housing (1) and defining a valve member between first and second chambers (12, 13), a seal (8) between the piston (7) and the bore (6), a seating (4) in the housing (1) between an inlet (2) and an outlet (3) in the housing, a valve head (11) on the piston for engagement with the seating (4), a restricted passage (17) in the piston between the inlet (2) and the first chamber (12) which is defined in the bore on the side of the piston remote from the seating, and a control valve (19) for controlling communication between the first chamber (12) and the outlet (3), the control valve (19) being movable between a closed position and an open position, in the closed position the control valve (19) isolates the first chamber (12) and the outlet (3) from each other whereby the piston (7) is urged into engagement with the seating (4) by pressure applied to the first chamber (12) from the inlet (2) through the restricted passage (17), and in the open position the control valve (19) places the first chamber (12) in open communication with the outlet (3) whereby the piston (7) moves relatively away from the seating (4) to place the inlet (2) in open communication with the outlet (3) due to a pressure drop from the first chamber (12) to the outlet (3) and the pressure drop between the first chamber (12) and the inlet (2) through the restricted passage (17).

2. An assembly according to claim 1, characterised in that when the control valve (19) closes and the piston (7) moves towards the seating (4), the seal (8) which comprises a rolling/sliding seal acts to damp the movement of the piston (7).

3. An assembly according to claim 1 or claim 2, characterised in that the seal (8) comprises an annular ring of elastomeric material.

4. An assembly according to any preceding claim, characterised in that the seal (8) is housed in a radial groove (9) in the piston (7).

5. An assembly according to any of claims 1-3, characterised in that the seal (8) is housed in a radial groove (25) in the wall of the bore (6).

6. An assembly according to any preceding claim, characterised in that the outlet passage (3) is larger in area than the inlet passage (2).

7. An assembly according to any preceding claim, characterised in that the control valve (19) may be operated by an electrical solenoid (15) responsive to signals from a wheel speed sensor.

8. An assembly according to any preceding claim, characterised in that the control valve (19) controls communication between the chambers (12, 13) through an axial passage (20) in the piston (7).

9. An assembly according to claim 8, characterised in that the area (A2) of the axial passage (20) in the piston (7) is greater than the area (A3) of the restricted passage (17) in the piston (7), but less than that of the inlet passage (2) and the outlet passage (3).

10. An assembly according to any preceding claim, characterised in that the area (A2) of the bore in the housing (1) is greater than the area (A1) of the seating (4).

**FIG.1.**

**FIG. 2.**